# EUROPEAN PATENT APPLICATION

(11) **EP 2 479 421 A1**
(43) Date of publication of application: **25.07.2012**
(21) Application number: 10817110.9
(22) Date of filing: 10.09.2010
(51) Int. Cl.: F02P 17/12, F02P 3/01, F02P 23/04

(54) **METHOD FOR DETERMINING COMBUSTION STATE OF SPARK-IGNITION INTERNAL COMBUSTION ENGINE**

(30) Priority: 18.09.2009 JP 2009216913
(71) Applicant: Daihatsu Motor Co., Ltd., Osaka 563-8651 (JP); Diamond Electric MFG. Co., Ltd., Osaka-shi Osaka 532-0026 (JP)
(72) Inventor: SERIZAWA, Takeshi, Gamo-gun Shiga 520-2531 (JP); OI, Hiroaki, Gamo-gun Shiga 520-2531 (JP); FUKUMURA, Yoshiyuki, Osaka-shi Osaka 532-0026 (JP); OKUMURA, Fumio, Osaka-shi Osaka 532-0026 (JP)
(74) Representative: Zimmermann, Tankred Klaus
(86) International application number: PCT/JP2010/065583
(87) International publication number: WO 2011/033997

(57) **Abstract**

Provided is a method for determining a combustion state of a spark-ignited internal combustion engine including an ignition plug to ignite a fuel-air mixture by a plasma generated by a reaction between a spark discharge generated by a high voltage applied through an ignition coil connected to the ignition plug and an electric field generated in a combustion chamber. In the method, a change in a secondary voltage secondarily generated in the ignition plug after the spark discharge in association with the spark discharge is detected. A case where the change in the secondary voltage deviates from a predetermined range is determined as an occurrence of misfire. This enables detection of a misfire state without being hindered from an ion current due to the plasma remaining in the combustion chamber.

## Description

### TECHNICAL FIELD

The present invention relates to a method for determining a combustion state of a spark-ignited internal combustion engine in which a fuel-air mixture is ignited by a plasma produced by a reaction between an electric field generated in a combustion chamber and a discharge, generated by an ignition plug.

### BACKGROUND ART

Up to now, in an automobile internal combustion engine, for example, a combustion state is monitored using an ion current, for example, to avoid misfire, and the occurrence of misfire is detected based on a change in the combustion state. In the technique disclosed in Patent Document 1, for example, a time period (occurrence period) in which an ion current is generated (held) according to the combustion and a time period (duration) in which a current detected as an ion current and generated due to noise is held are summed up. A result (quotient value) is obtained by dividing this total value by the number of detected occurrence periods and duration. The presence or absence of misfire is determined based on this quotient value. The determination of misfire and combustion is performer by a comparison between a predetermined determination value and a quotient. When the quotient is greater than the determination value, the combustion is determined as normal. When the quotient is smaller than the determination value, on the other hand, the occurrence of misfire is determined.

Meanwhile, a compensation for a spark discharge of an ignition plug has been attempted to obtain a favorable combustion state. In a known technique disclosed in Patent Document 2, for example, a plasma atmosphere is generated in a discharge area of an ignition plug. Further, an arc discharge is performed in the plasma atmosphere. This allows a fuel-air mixture to be reliably ignited in a combustion chamber with no application of a higher voltage as compared with the conventional case. Therefore, a stable flame can be obtained.

Patent Document 1: JP-A-2008-51031
Document 2: JP-A-2007-32349

### DISCLOSURE OF THE INVENTION

### PROBLEMS TO BE SOLVED BY THE INVENTION

Incidentally, since a plasma is generated in an ignition system using the plasma as disclosed in Patent Document 2, an electric field is generated such that a center electrode and a ground electrode of an ignition plug are placed in the electric field. In this case, for example, when an AC voltage is applied to the center electrode as means for generating the electric field, an ion current cannot be detected during generation of a spark discharge between the center electrode and the ground electrode. This makes it difficult to detect misfire by using the ion current as disclosed in Patent Document 1 described above. Additionally, when the plasma remains in the combustion chamber, the ions contained in the plasma cause an ion current. This may make it difficult to detect a misfire state base on the ion current.

In view of the above, an object of the present invention is to overcome the defects as described above.

### SOLUTIONS TO THE PROBLEMS

That is, according to an aspect of the present invention, there is provided a method for determining a combustion state of a spark-ignited internal combustion engine including an ignition plug to ignite a fuel-air mixture by a plasma generated by a reaction between a spark discharge generated by a high voltage applied through an ignition coil connected to the ignition plug and an electric field generated in a combustion chamber, the method including: detecting a change in a secondary voltage secondarily generated in the ignition plug after the spark discharge in association with the spark discharge; and determining an occurrence of misfire when the detected change in the secondary voltage deviates from a predetermined range.

According to this configuration, the plasma is generated during the occurrence of misfire, while the flame around the plasma does not expand in the combustion chamber. Thus, the change in the secondary voltage which is generated in association with the spark discharge and which is measured through the ignition plug deviates from the predetermined range. This makes it possible to determined the occurrence of misfire. In other words, although the plasma is generated, a flame kernel is unstably formed or no flame kernel is formed during the occurrence of misfire. It causes an increase in electrical resistance in the combustion chamber to the secondary voltage generated in the ignition plug using the plasma as a medium. As a result, the change in the secondary voltage deviates from the predetermined range. Therefore, it is possible to determine the occurrence of misfire more accurately than the method for determining the occurrence of misfire using the ion current.

The secondary voltage refers to a voltage that can be measured in a secondary-side circuit of an ignition coil, and a voltage that can be measured on the output side of electric generating means for generating an electric field, after the spark discharge. Specifically, the secondary voltage is a voltage measured based on a current flowing through a secondary-side winding of the ignition coil, a voltage generated in the secondary-side winding of the ignition coil, and a voltage that can be measured at an output stage of the electric generating means. Therefore, the determination of misfire can be achieved by determining whether or not the change in these voltages falls within the predetermined range.

Examples of the electric generating means described above include an electromagnetic wave generator that generates electromagnetic waves of various frequencies, an AC voltage generator that applies an AC voltage to a pair of electrodes arranged in the combustion chamber, and a pulsating current voltage generator that applies a pulsating current voltage to a similar pair of electrodes.

Examples of the electromagnetic waves from the electromagnetic wave generator include microwaves and high-frequency waves having frequencies used in various radio communications (for example, amateur radio).

The AC voltage output from the AC voltage generator has a frequency equal to that of the high-frequency waves described above.

Any pulsating current voltage generator may be used as long as the generator generates a DC voltage that periodically changes. The DC voltage may have any type of waveform. Specifically, examples of the pulsating current voltage according to the present invention include a pulse voltage that changes in a range from a reference voltage including 0 volts to a certain voltage at a constant period, a DC voltage that changes in a range from the reference voltage to a voltage that sequentially increases and decreases at a constant period (for example, a DC voltage having a waveform obtained by performing half-wave rectification on an AC voltage), and a DC voltage obtained by applying a DC bias to an AC voltage. In this case, the constant period may correspond to the frequency of the high-frequency waves described above. Note that the waveform is not limited to that described above. Examples of the waveform may include sine waves, sawtooth-like waves, and triangular waves. Other aspects of the present invention include a combustion determination device that implements the combustion determination method described above, combustion state determination program that causes a control device including a computer to execute the method describe above, and a program product including media storing the program. Examples of the media include recording media such as ROMs and transmission media such as communication wires.

### EFFECTS OF THE INVENTION

The present invention has the configuration as described above. Thus, a flame kernel is unstably formed or no flame kernel is formed during the occurrence of misfire. For this reason, during the occurrence of misfire, the electrical resistance in the combustion chamber to the secondary voltage generated in the ignition plug due to the plasma increases. A deviation of the change in the secondary voltage from the predetermined range is determined as a result. This makes it possible to determine the occurrence of misfire more accurately than the method for determining the occurrence of misfire the ion current. The object, features, aspects, and advantages of the invention become apparent by the following detailed description and the accompanying drawings.

### DESCRIPTION OF THE DRAWINGS

Fig. 1 is an explanatory configuration diagram illustrating a schematic configuration of an embodiment of the present invention.
Fig. 2 is a flowchart illustrating a control procedure of the embodiment.
Fig. 3 is a block diagram illustrating a configuration of an electromagnetic wave generator that can be used in the embodiment of the present invention.
Fig. 4 is a block diagram illustrating a configuration of an AC voltage generator that can be used in the embodiment of the present invention.
Fig. 5 is a circuit diagram illustrating an example of an H-bridge circuit shown in Fig. 4.

### DESCRIPTION OF EMBODIMENTS

Hereinafter, an embodiment of the present invention will be described with reference to the drawings.

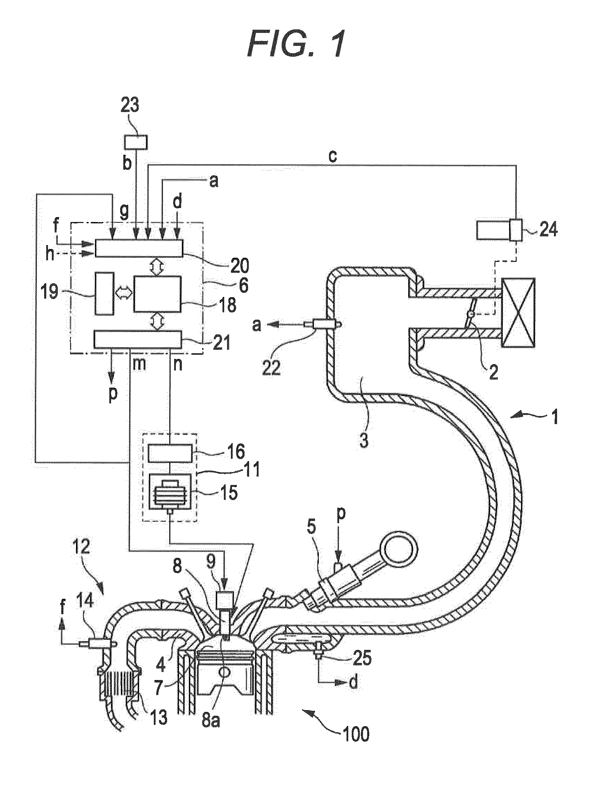

Fig. 1 schematically illustrates the configuration of one cylinder of an engine 100. This engine 100 has three cylinders for automobile. In an inlet system 1 of the engine 100, a throttle valve 2 that is opened or closed in response to motion of an accelerator pedal (not shown) is disposed. A surge tank 3 is provided at the downstream side of the throttle valve 2. The surge tank 3 communicates with a cylinder head 4. Additionally, a fuel injection valve 5 is provided in the vicinity of an end of the tank 3 on the side of the cylinder head 4. The fuel injection valve 5 is controlled by an electronic control device 6. An ignition plug 8 is attached to a ceiling portion of a combustion chamber 7. An ignition coil 9 with an integrated igniter is replaceably attached to the ignition plug 8. In this embodiment, a center electrode 8a of the ignition plug 8 serves as a part of electric generating means for generating an electric field. The center electrode 8a is connected to a microwave generator 11 serving as the electric generating means through a waveguide and a coaxial cable which are not shown. Further, a three-way catalyst (hereinafter, catalyst 13) is disposed in a conduit leading to a muffler (not shown) of an exhaust system 12. At the upstream thereof, an O₂ sensor 14 is attached. Note that the igniter includes an ion current detecting circuit. The ion current detecting circuit uses the ignition plug 8 as a sensor. The ion current detecting circuit detects an ion current generated along with the generation of a plasma and the combustion of a fuel-air mixture.

The microwave generator 11 includes a magnetron 15 and a control circuit 16 that controls the magnetron 15. A microwave output from the magnetron 15 is applied to the ignition plug 8 through a waveguide and a coaxial cable. The control circuit 16 receives a microwave generation signal "n" output from the electronic control device 6. The control circuit 16 controls an output period and an output power of the microwave output from the magnetron 15, based on the received microwave generation signal "n".

The electronic control device 6 corresponds to a specific example of a detector and a determiner according to the present invention. The electronic control device 6 is mainly composed of a microcomputer system. The microcomputer system includes a central processing unit 18, a storage device 19, an input interface 20, and an output interface 21. The central processing unit 18 executes a combustion state determination program, which is described later and stored in the storage device 19 to control an operation of the engine 100. The electronic control device 6 includes a voltage measuring circuit. The voltage measuring circuit measures a secondary-side voltage "g" of the ignition coil 9 required to execute the combustion determination program.

Information necessary for performing the operation control of the engine 100 is input to the central processing unit 18 via the input interface 20. Further, the central processing unit 18 outputs a signal for the control to the fuel injection valve 5 and the like via the output interface 21. Specifically, the input interface 20 receives a manifold pressure signal "a", an engine speed signal "b", an IDL signal "c", a water temperature signal '"d", a voltage signal "f', and secondary-side voltage "g". The manifold pressure signal "a" is output from a manifold pressure sensor 22 for detecting a pressure of intake air in the surge tank 3. The engine speed signal "b" is output from an engine speed sensor 23 for detecting an engine speed of the engine. The IDL signal "c" is output from an idle switch 24 for detecting an open/close state of the throttle valve 2. The water temperature signal "d" is output from a water temperature sensor 25 for detecting a coolant temperature of the engine 100. The voltage signal "f' is output from the O₂ sensor 14. The O₂ sensor 14 detects an oxygen concentration in an exhaust gas exhausted from the combustion chamber 7 through an exhaust valve. The secondary-side voltage "g" is described later. On the other hand, the output interface 21 outputs a fuel injection signal "'p", an ignition signal "m", the microwave generation signal "n", and the like. The fuel injection signal "p" is output to the fuel injection valve 5. The ignition signal "m" is output to an igniter 10. The microwave generation signal "n" is output to the microwave generator, 11.

The electronic control device 6 has a program incorporated therein. The program has, as main information, the manifold pressure signal "a" output from the manifold pressure sensor 22 and the engine speed signal "b" output from the engine speed sensor 23. According to the program, a basic injection time is corrected based on various correction factors determined depending on the operation state of the engine 100. As a result, an operating time (that is, an injector final electrified time) of the fuel injection valve 5 is determined. The fuel injection valve 5 is controlled based on the determined electrified time. This allows injection of a fuel to the inlet system 1 from the fuel injection valve 5 according to an engine load.

In this engine 100, the microwave generated from the microwave generator 11 is radiated from the center electrode 8a into the combustion chamber 7 according to the output period described above. A plasma is generated by a reaction between an electric field thus generated and a spark discharge due to the ignition plug 8. The plasma thus generated ignites a fuel-air mixture. Upon generation of the plasma, the microwave is applied to the center electrode 8a. As a result, an electric field is generated in the combustion chamber 7 in a direction orthogonal to the spark discharge due to the ignition plug 8.

Upon generation of the ignition, ignition coil 9 generates a spark discharge in the ignition plug 8. An electric field is generated by the microwave almost simultaneously with the start of the spark discharge, immediately after the start of the spark discharge, or immediately before the start of the spark discharge. The generation of a plasma by a reaction between the spark discharge and the electric field causes rapid combustion of the fuel-air mixture in the combustion chamber 7. Note that the time immediately after the start of the spark discharge is preferably a start time of an inductive discharge for forming a spark discharge, at the latest.

Specifically, the spark discharge due to the ignition plug 8 becomes a plasma in the electric field. The plasma ignites the fuel-air mixture. As a result, a flame kernel as a start point of the flame propagation combustion is greater than a frame kernel generated by an ignition caused only by the spark discharge. Further, a large number of radicals are generated in the combustion chamber 7. These promote the combustion.

The reason for this is as follows. That is, the flow of electrons due to the spark discharge, and ions and radicals generated by the spark discharge vibrate and meander under the influence of the electric field. This leads to an increase in path length of these electrons, ions, and radicals. Thus, the number of collisions between these electrons, ions, and radicals and surrounding water molecules or nitrogen molecules remarkably increases. The water molecules or nitrogen molecules colliding with the ions or radials become OH radials or N radials. Furthermore, the surrounding gas influenced by the collision of the ions or radials comes into an ionized state (that is, plasma state). This results in a remarkable increase in ignition area of the fuel-air mixture. Therefore, the frame kernel as a start point of the flame propagation combustion also increases.

As a result, the fuel-air mixture is ignited by the plasma generated by a reaction between the spark discharge and the electric field. This leads to an enlargement in ignition area. Thus, this ignition is a three-dimensional ignition different from a two-dimensional ignition using only the ignition plug 8. Therefore, the initial combustion is stabilized. Furthermore, the combustion is rapidly propagated in the combustion chamber 7 along with the increase in radials. This expands the combustion at a high combustion rate.

In this configuration, the electronic control device 6 has a combustion state determination program incorporated therein. According to the program, a change in a secondary voltage secondarily generated in the ignition plug 8 after the spark discharge in association with the spark discharge is detected. When the detected change in the secondary voltage deviates from the predetermined range, the occurrence of misfire is determined, In this embodiment, a secondary-side voltage generated an the secondary side of the ignition coil 9 is employed as the secondary voltage.

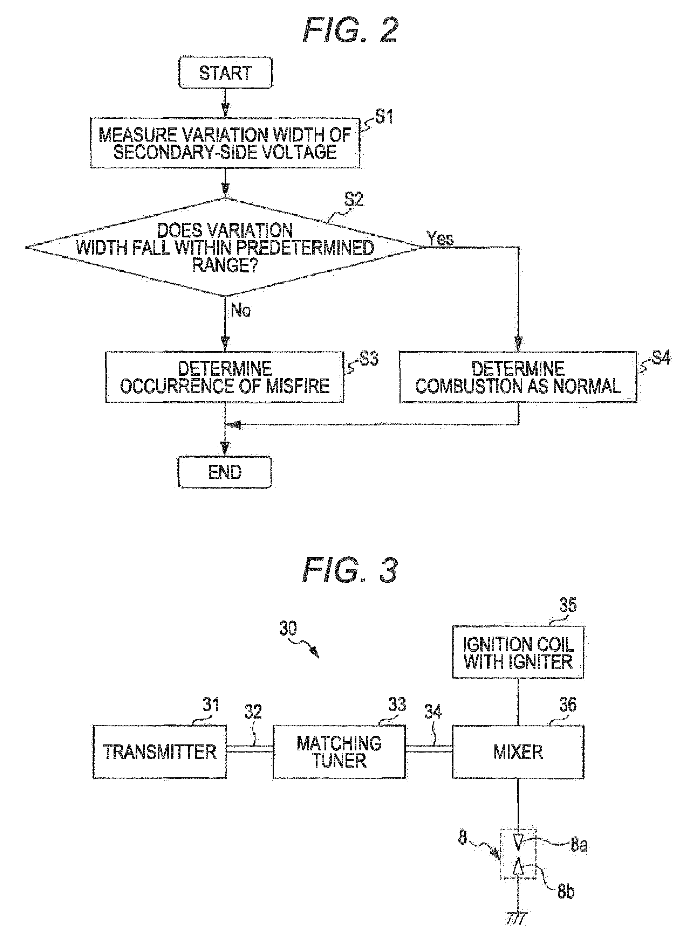

A schematic procedure for combustion state determination of the engine 100 will be described below with reference to the flowchart shown in Fig. 2. The combustion state determination is executed in a steady operation state in which the combustion is promoted, in an operation closer to a misfire limit, and in a transient operation state. In operation states, a period in which the microwave is applied to the center electrode 8a is longer than the same period in an operation state other than the above-mentioned operation states.

First, in step S1, the secondary-side voltage "g" and the variation width thereof are measured. As a result, a change in the secondary-side voltage of the ignition coil 9 is detected for each ignition. The variation width is measured by, for example, a measurement of a maximum value and a minimum value of the secondary-side voltage "g" and by a calculation of a difference between the measured maximum value and minimum value. In this embodiment, the microwave is applied to the center electrode 8a of the ignition plug 8. Thus, the secondary-side voltage "g" is measured based on a current flowing through the secondary winding of the ignition coil 9 through the ignition plug 8 using the generated plasma as a medium. The measurement of the variation width of the secondary-side voltage "g" is performed only at a predetermined time after the application of the ignition signal to the ignition coil 8. The current flows in a state where the ion current based on the ions in the plasma is modulated by the microwave.

In step S2, it is determined whether or not the variation width of the measured secondary-side voltage "g" falls within the predetermined range. The predetermined range is set with the variation width of the secondary-side voltage "g" obtained when the engine is in the steady operation as a reference. The predetermined range is set to a range larger than the variation width of the secondary-side voltage "g" in the steady operation. As a result, the variation width of the secondary-side voltage "g" which is measured when the combustion is normal in the steady operation falls within this range. This predetermined range is set to correspond to an operating range (for example, an operating range partitioned into a low-load low-rotation range, a low-load high-rotation range, a high-load low-rotation range, and a high-load high-rotation range) of the engine 100.

When it is determined that the measured secondary-side voltage "g" deviates from the predetermined range, the process proceeds to step S3. The ignition during this time is poor, and thus the occurrence of misfire is determined. On the other hand, in step S2, when the measured secondary-side voltage "g" falls within the predetermined range, the process proceeds to step S4 and it is determined that the combustion is normal.

In this configuration, for example, when the operation state approaches the misfire limit due to an increase in exhaust gas recirculation amount in an exhaust gas recirculation control (EGR), the period in which the microwave is applied to the center electrode 8a of the ignition plug 8 is extended. Therefore, the plasma exists for a long period of time.

In this state, when the combustion is norman, a flame kernel is formed after the generation of the plasma. Further, the flame is enlarged in the combustion chamber 7 around the flame kernel. When the flame is enlarged in this manner, the plasma and combustion gas in the combustion chamber 7 allow the ion current to be flowed into the center electrode 8a of the ignition plug 8. Thus, the secondary-side voltage "g", which is measured through the ignition plug 8, is stabilized and the change thereof decreases. This is caused by the formation of a flame kernel sufficient for the ignition due to the formation of the plasma in the vicinity of the center electrode 8a, and by the reduction in electrical resistance in a channel through which the ion current flows.

That is, in this case, when the program is executed, the variation width of the secondary-side voltage "g" measured when steps S1 and S2 are executed falls within the predetermined range. Therefore, in step S4, it is determined that no misfire is occurring and the combustion is normal.

On the contrary, during the occurrence of misfire, the plasma is generated, but no frame kernel is generated around the plasma. For this reason, the flame is not enlarged in the combustion chamber 7. Thus, the change in the secondary-side voltage "g", which is measured through the ignition plug 8, deviates from the predetermined range. In this case, unlike the above-mentioned case, the plasma is formed, but the flame kernel is unstably formed or no frame kernel is formed because of the occurrence of misfire. Thus, the electrical resistance in the combustion chamber 7 of the ion current increases. Accordingly, the variation width of the secondary-side voltage increases. As a result, the variation width of the secondary-side voltage "g" deviates from the predetermined range. Specifically, in this case, when the program is executed, the variation width of the secondary-side voltage "g", which is measured when steps S1 and S2 are executed, deviates from the predetermined range. Thus, in step S3, the occurrence of misfire is determined. Therefore, the plasma is generated for a long period of time. Consequently, even when it is not possible to use the method in which no plasma is generated and the combustion state is determined using the ion current flowing into the combustion chamber 7 after the ignition, the occurrence of misfire can be determined more accurately than the method for determining the combustion state including misfire using the ion current.

Note that the present invention is not limited to the embodiment described above.

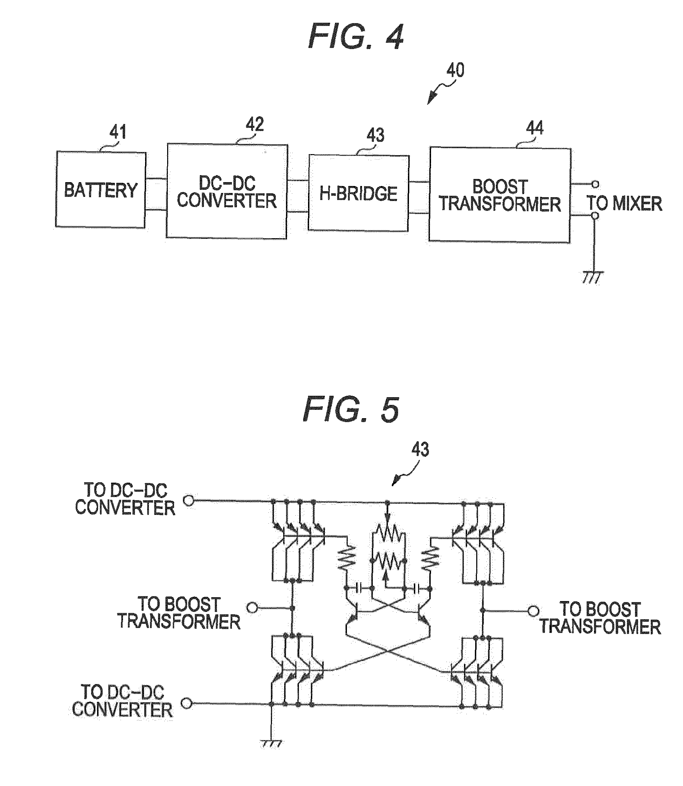

In the embodiment described above, the secondary-side voltage "g", which is the secondary voltage, is measured based on the current flowing through the secondary-side winding of the ignition coil 9. However, the secondary-side voltage generated in the secondary-side winding may be measured as the secondary voltage. The generated voltage is a high voltage. For this reason, the voltage is divided, by a voltage dividing circuit, into low voltages to be easily measured, and the low voltages are then measured. Further, a voltage secondarily generated in association with the spark discharge at an output stage of each of an electromagnetic wave generator 30 and an AC voltage generator 40, each of which serves as the electric generating means, as described later, as shown in Figs. 3 and 4 may be employed as the secondary voltage. In the case of employing such a secondary voltage, there is no need to measure the secondary-side voltage "g" in the embodiment described above.

The microwave generator is not limited to the magnetron described above, but may be a traveling-wave tube or the like. Additionally, the microwave generator may include a microwave oscillating circuit using semiconductor.

Moreover, the center electrode 8a of the ignition plug 8 may serve as an antenna. In this case, the center electrode 8a serves as a high-frequency wave feed portion. In this case, when high-frequency waves are continuously applied to the center electrode at a constant voltage, the temperature of the center electrode excessively increases. For this reason, the voltage of high-frequency waves is controlled to be lower than an upper-limit temperature set based on the heat resistant temperature of the center electrode.

Although the case where the center electrode 8a of the ignition plug 8 serves as an antenna has been described, the center electrode 8a need not serve as an antenna. The electric generating means may be corrected to a separate antenna such as a monopole antenna or a horn antenna.

On the other hand, the frequency of the electromagnetic wave in the electromagnetic wave generator is not limited to the frequency band of the microwave. Any frequency may be used as long as the frequency allows generation of an electric field in a spark discharge portion of the ignition plug 8 and allows generation of a plasma due to the generation of the electric field. Hence, the electromagnetic wave generator having a configuration as shown in Fig. 3, for example, is suitable.

The electromagnetic wave generator 30 shown in Fig. 3 includes a transmitted 31, a matching tuner 33, and a mixer 36. The transmitter 31 oscillates an electromagnetic wave of 300 MHz, for example. The matching tuner (or antenna tuner) 33 is connected to an output terminal of the transmitter 31 via a coaxial cable 32. The mixer 36 is connected to an output terminal of the matching tuner 33 via an unbalanced cable 34. The mixer 36 is also connected to an ignition coil 35 having an integrated igniter. In this example, the center electrode 8a of the ignition plug 8 serves as an antenna that radiates an electromagnetic wave. Accordingly, the mixer 36 applies, to the center electrode 8a of the ignition plug 8, the electromagnetic wave output from the transmitter 31 via the matching tuner 33. Further, the mixer 36 applies an ignition voltage from the ignition coil 35 to the center electrode 8a. The mixer 36 mixes the electromagnetic wave from the transmitter 31 with the ignition voltage from the ignition coil 35. In the electromagnetic wave generator 30 configured as described above, the output of the electromagnetic wave is increased or decreased by changing the frequency of the electromagnetic wave. Otherwise, the intensity of the generated electric field is controlled by increasing or decreasing the output of the electro magnetic wave at a constant frequency.

In this example, an electric field is generated between the center electrode 8a and the ground electrode 8b due to the electromagnetic wave from the transmitter 31. A plasma is generated by a reaction between the generated electric field and the spark discharge that is generated between the center electrode 8a and the ground electrode 8b. This plasma ignites the fuel-air mixture. Further, in the electromagnetic wave generator 30, the secondary voltage appears in the unbalanced cable 34 after the spark discharge. For this reason, the secondary voltage is measured at the position of the unbalanced cable 34.

An AC voltage generator may be used in place of the electromagnetic wave generator described above. In the AC voltage generator 40 shown in Fig. 4, a DC-DC converter 42 serving as a booster circuit boosts a voltage (for example, about 12 V (volts)) of a vehicle battery 41 to 300 to 500 V. After that, an H-bridge circuit 43 illustrated in Fig. 5 changes this voltage into an AC voltage having a frequency of about 1 MHz to 500 MHz, preferably 100 MHz. Further, a boost transformer 44 boosts this AC voltage to about 4 kVp-p to 8 kVp-p.

In the AC voltage generator 40 configured as described above, for example, the center electrode 8a and the ground electrode 8b of the ignition plug 8 serve as a pair of electrodes for generating an electric field. In this case, like the electromagnetic wave generator 30 described above, a mixer is disposed between the boost transformer 44 serving as an AC voltage output terminal portion, the igniter and the ignition coil, and the ignition plug 8. By application of a high AC voltage between the center electrode 8a and the ground electrode 8b, the electric field having a frequency in the above-mentioned frequency band and having polarities that are alternately switched is generated in the gap, a discharge area, of the ignition plug 8. Accordingly, a plasma is generated in the vicinity of the ignition plug 8 by a reaction between the generated electric field and the spark discharge. This plasma ignites the fuel-air mixture. In this example, the secondary voltage appears at the secondary side of the boost transformer 44 after the discharge. Therefore, the secondary voltage may be measured at a wiring portion leading to the mixer.

Note that the pair of electrodes may include the center electrode 8a and the ground electrode 8b. In this case, the ground electrode 8b may be replaced with a cylinder head, a cylinder block, or a piston. Obviously, the igniter in the configurations illustrated in Figs. 3 and 4 has the same configuration as the igniter of the embodiment described above.

As described above, the pair of electrodes may include the center electrode 8a and the ground electrode 8b of the ignition plug 8. Alternatively, the electrodes may be arranged at positions sandwiching the ignition plug 8. That is, the pair of electrodes is arranged to be opposed to each other with a predetermined distance. The pair of electrodes is arranged such that the ignition plug 8 is positioned between the electrodes. Also in this case, one of the electrodes may be replaced with a ground electrode, a cylinder head, a cylinder block, or a piston.

Note that a pulsating current generator may be used in place of the AC voltage generator. In other words, an electric field may be generated between the pair of electrodes by applying a pulsating current voltage, such as a pulse voltage, in place of an AC voltage, between the pair of electrodes. As in the AC voltage generator, a DC-DC converter boosts a DC voltage supplied from a battery in the pulsating current generator. A pulsating current is formed by connecting or disconnecting the DC voltage at a predetermined cycle. This pulsating current is boosted by the boost transformer and is then applied to the pair of electrodes. In the pulsating current generator, a switching circuit that periodically turns on and off is used in place of the H-bridge circuit. An electric field can be generated between the pair of electrodes also by using such a pulsating current generator. Consequently, the same advantageous effects as those of the embodiment described above can be obtained.

In addition, specific configurations of the parts are not limited to those of the embodiment described above, but can be modified in various manners without departing from the scope of the present invention.

This international application is based upon and claims the benefit of priority from Japanese Patent Application No. 2009-216913, filed on September 18, 2009, the disclosure of which is incorporated herein in its entirety by reference.

### INDUSTRIAL APPLICABILITY

The present invention is applicable to a spark-ignited internal combustion engine that requires, for ignition, a spark discharge due to an ignition plug and uses gasoline or liquefied natural gas as a fuel.

### DESCRIPTION OF REFERENCE SIGNS

- 6: ELECTRONIC CONTROL DEVICE (DETECTOR, DETERMINER)
- 7: COMBUSTION CHAMBER
- 8: IGNITION PLUG
- 9: IGNITION COIL
- 15: MAGNETRON
- 18: CENTRAL PROCESSING UNIT
- 19: STORAGE DEVICE
- 20: INPUT INTERFACE
- 21: OUTPUT INTERFACE

## Claims

1. A method for determining a combustion state of a spark-ignited internal combustion engine including an ignition plug to ignite a fuel-air mixture by a plasma generated by a reaction between a spark discharge generated by a high voltage applied through an ignition coil connected to the ignition plug and an electric field generated in a combustion chamber, the method comprising:
detecting a change in a secondary voltage secondarily generated in the ignition plug after the spark discharge in association with the spark discharge; and
determining an occurrence of misfire when the detected change in the secondary voltage deviates from a predetermined range.

2. The method for determining a combustion state of a spark-ignited internal combustion according to claim 1, wherein the change in the secondary voltage is detected based on a current flowing through a secondary-side winding of the ignition coil.

3. The method for determining a combustion state of a spark-ignited internal combustion engine according to claim 1, wherein the change in the secondary voltage is detected based on a voltage generated in a secondary-side winding of the ignition coil.

4. A combustion state determination device for a spark-ignited internal combustion engine including an ignition plug to ignite a fuel-air mixture by a plasma generated by a reaction between a spark discharge generated by a high voltage applied through an ignition coil connected to the ignition plug and an electric field generated in a combustion chamber, the combustion state determination device comprising:
a detector that detects a change in a secondary voltage secondarily generated in the ignition plug after the spark discharge in association with the spark discharge; and
a determiner that determines an occurrence of misfire when the detected change in the secondary voltage deviates from a predetermined range.

5. The combustion determination device for a spark-ignited internal combustion engine according to claim 4, wherein the detector the change in the secondary voltage based an a current flowing through a secondary-side winding of the ignition coil.

6. The combustion determination device for a spark-ignited internal combustion engine according to claim 4, wherein the detector detects the change in the secondary voltage based an a voltage generate in a secondary-side winding of the ignition coil.
